# EUROPEAN PATENT APPLICATION

(11) **EP 3 677 427 A1**
(43) Date of publication of application: **08.07.2020**
(21) Application number: 19205837.8
(22) Date of filing: 29.10.2019
(51) Int. Cl.: B32B 41/00, B29C 63/02, G06F 1/16

(54) **OVERLAY APPLICATOR**

(30) Priority: 07.01.2019 GB 201900172
(71) Applicant: Strax Group, Hayes Greater London UB11 1AF (GB)
(72) Inventor: CARTER, Dan William, Maidenhead SL6 4PZ (GB); YIN, Chan Kwun, Kwai Chung, NT (HK)
(74) Representative: Downing, Michael Philip

(57) **Abstract**

An overlay applicator for applying an overlay to a surface of an electronic device. The overlay applicator has a stationary portion and a base portion arranged for relative movement between the base portion and the stationary portion. The base portion comprises a recess for retaining an electronic device therein.

## Description

### FIELD OF THE INVENTION

The present invention relates to an overlay application device for applying an overlay to an electronic device.

### BACKGROUND ART

Electronic devices with screens and displays are widely commercially available. The screens and displays on such devices vary from simple LCD displays to capacitive touch screens for user interaction. Such screens can be sensitive and prone to becoming dirty and/or damaged both in use and while being transported, particularly as hand held devices are frequently carried about the person.

It is known to cover screens and displays of electronic devices to protect them from cracking, scratching, and general wear and tear with a protective coating. A variety of protective overlays are available for application to electronic devices at point of sale or later by the user. The majority of said overlays have a layer of adhesive applied to at least a part of the overlay for fixation to the electronic device in question. Applying such overlays can be difficult, resulting in misalignment, air bubbles becoming trapped between the surface of the electronic device and the overlay, or dirt and other unwanted particles becoming trapped in the adhesive. Furthermore, not all screens and displays have a planar outer surface, with newer models having a curved profile, particularly toward the edges of the device.

Overlay applicator devices exist to aid in the application of overlays to electronic devices. Such devices tend to be specifically designed for applying an overlay to a specific model of phone, or at least an electronic display with a planar screen or display. European patent application no. EP14872701.9 discloses an overlay applicator device with a cradle and a rotatable lid hingedly attached and arranged for applying pressure to an overlay.

Devices such as that disclosed in European patent application no. EP14834560.6 are concerned with cleaning a surface prior to application of an overlay, and methods of aligning an overlay prior to application.

However, there remains a need for an overlay applicator that provides a repeatable method of applying an overlay to a range of electronic devices with curved and planar surfaces in such a manner that addresses the foregoing issues.

### SUMMARY OF THE INVENTION

The present invention provides a device to apply an overlay to a screen accurately relative an electronic device screen having both a curvature and/or a planar profile, and to remove the air between the overlay and the electronic device when the overlay is applied.

The present invention therefore provides an overlay application device comprising a stationary portion and a moveable base portion arranged for movement relative the stationary portion, the base portion comprising a recess for retaining an electronic device therein, and the stationary portion comprising a press means extending transverse the base portion adjacent the recess and arranged such that the surface of the press means is at a fixed distance from the recess.

Preferably, the stationary portion further comprises a protrusion arranged for locating a first end of an overlay backing relative the stationary portion.

The base portion may further comprise a protrusion for locating a second end of an overlay backing relative the base portion.

The press means may comprise a central portion having a substantially constant cross sectional area. Furthermore, the press means may have end portions, each end portion having a cross sectional area greater than that of the central portion, and a taper between the central portion and each of the end portions. Preferably, the taper is arranged for passage adjacent longitudinal edges of the recess. The press means may be a roller.

The overlay application device may further comprise an insert for retaining an electronic device therein, and arranged for insertion into the recess. Preferably, the insert is a frame. The frame may have inside dimensions sized to accommodate a specific model of electronic device.

Preferably, the stationary portion further comprises a seat portion for supporting the base portion.

The present invention provides a method of aligning a protective overlay in such a way as to be accurate relative to the display topology of an electronic device. The overlay is suspended with an adhesive layer retained away from the electronic device such that contact between the adhesive layer and the electronic device is prevented until such time that a roller mechanism can apply the overlay to the electronic device, removing any air between the device and the overlay as the overlay assembly is moved through the roller mechanism so no residual air bubbles remain.

The present invention therefore further provides a method of applying an overlay to an electronic device, the method comprising the steps of providing an overlay application device comprising a stationary portion and a base portion, the base portion comprising a recess for receiving an electronic device, the stationary portion having a press means; inserting an electronic device in the recess; providing an overlay assembly comprising an overlay and an overlay backing, the overlay comprising an adhesive layer on a first side and the overlay backing affixed to a second side of the overlay; positioning the overlay assembly relative the base portion such that the overlay is aligned with the recess, the adhesive layer facing the recess; moving the base portion relative the stationary portion from a first position to a second position to cause the overlay backing to separate from the overlay, and the press means to apply pressure to the overlay.

The method may further comprise the steps of providing an insert sized to retain an electronic device; and inserting the insert into the recess.

Preferably, the method further comprising the steps of locating a first end of the overlay backing on a protrusion on the stationary portion; and locating a second end of the overlay backing on a protrusion on the base portion.

The present invention further provides a kit of parts comprising an overlay applicator device as described herein, an insert sized for insertion into the recess of the overlay applicator device, and an overlay assembly comprising an overlay and an overlay backing.

### BRIEF DESCRIPTION OF THE DRAWINGS

An embodiment of the present invention will now be described by way of example, with reference to the accompanying figures in which;
Figure 1 is an isometric view of an overlay application device in a first position;
Figure 2 is an exploded view of an assembly comprising an overlay application device in accordance with an embodiment of the invention, an electronic device, an insert, and a screen protector assembly;
Figure 3 shows the overlay application device of figure 1 with an insert retaining an electronic device inserted therein;
Figure 4 shows the overlay application device with insert and electronic device with a screen protector assembly overlaid;
Figure 5 shows the screen protector assembly of figure 3 located on the overlay application device;
Figure 6 shows the overlay application device in an intermediate position in use;
Figure 7 shows the overlay application device in a second position in use;
Figure 8 shows the overlay application device in the second position after a screen protector has been applied to an electronic device;
Figure 9 shows the overlay application device in the second position with a voided recess;
Figure 10 is a section side view through A-A (figure 3) of overlay application device in a first position with a voided recess;
Figure 11 shows the section side view of figure 10 with an insert retaining an electronic device inserted therein and a screen protector assembly located on the overlay application device;
Figure 12 shows a section side view of the overlay application device in the intermediate position in use through B-B (figure 6);
Figure 13 shows a section side view of the overlay application device in the second position in use through C-C (figure 7);
Figure 14 is an end view of a screen protector assembly;
Figure 15 in a section end view of the screen protector assembly through D-D (figure 8); and
Figure 16 shows the section end view shows the section end view of the overlay application device through D-D with an insert retaining an electronic device inserted therein and a screen protector assembly located on the overlay application device.

### DETAILED DESCRIPTION OF THE EMBODIMENTS

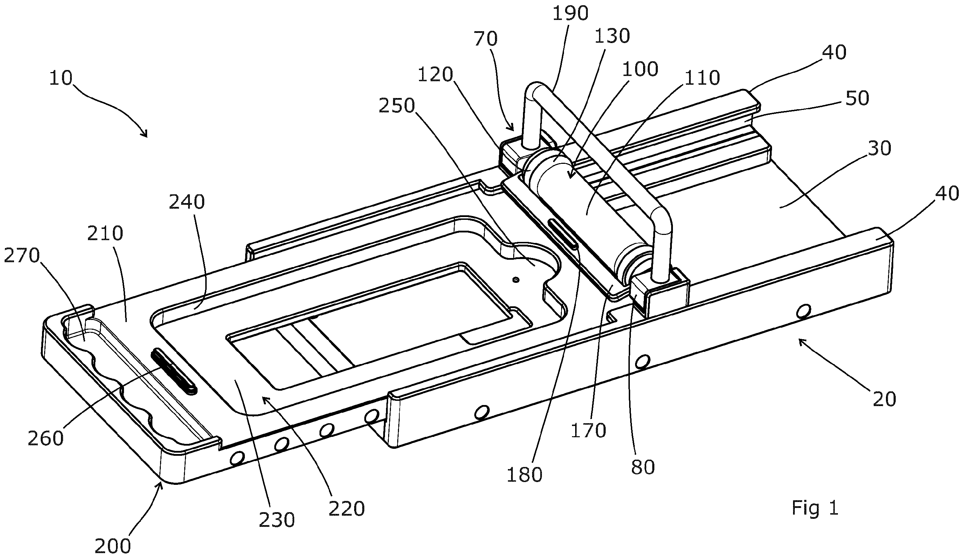

Figure 1 shows an overlay application device 10 in accordance with the present invention. The overlay application device 10 comprises a stationary portion 20 and a moveable base portion 200 arranged to move relative the stationary portion 20.

Stationary portion 20 comprises a seat portion 30 forming a stationary base. Seat portion 30 is substantially rectangular. A pair of walls 40 are arranged opposite one another along the longitudinal edges of stationary portion 20 upstand from seat portion 30. Seat portion 30 has a planar underside and is intended for use on a flat surface, such as a table top or counter. In the present embodiment, the walls 40 have a c-shaped profile forming a slot 50 for slidably retaining the base portion 200 therein.

A press means assembly 70 is mounted on walls 40 and spaced apart from seat portion 30. In the present embodiment, the press means assembly 70 is located in a longitudinally central location on walls 40. However, in alternative embodiments, the press means assembly 70 may be located at any longitudinal location along walls 40.

A retention block 80 is affixed to each of walls 40 for retaining spindle 90. Spindle 90 extends between the retention blocks 80 and is arranged transverse walls 40. Spindle 90 supports a roller 100 that extends between the retention blocks 80. The roller 100 is arranged transverse the longitudinal extent of the stationary portion 20. Roller 100 is retained in a fixed position relative seat portion 30.

The roller 100 is retained by spindle 90 so that it may rotate. In some embodiments, additional components may be present to ensure the free rotation of the roller 100 about spindle 90, including bushes or bearings.

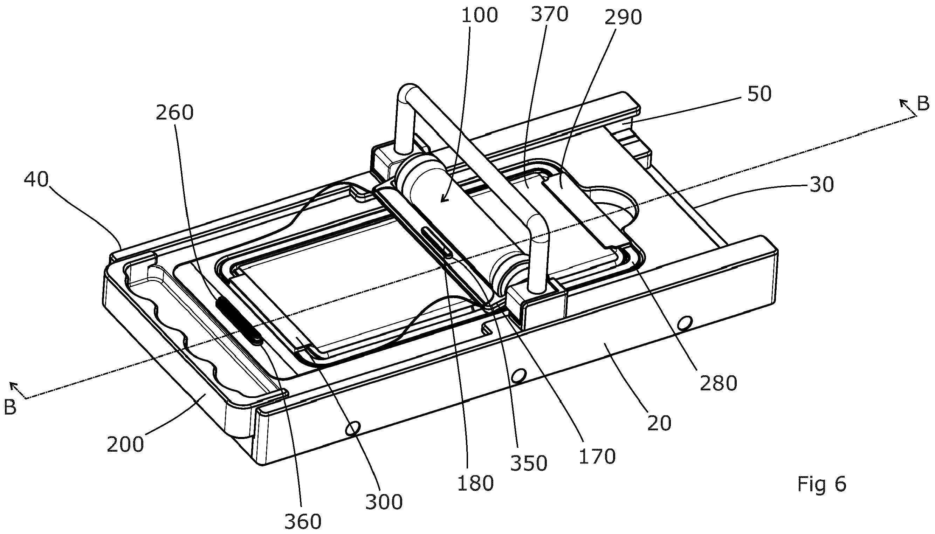

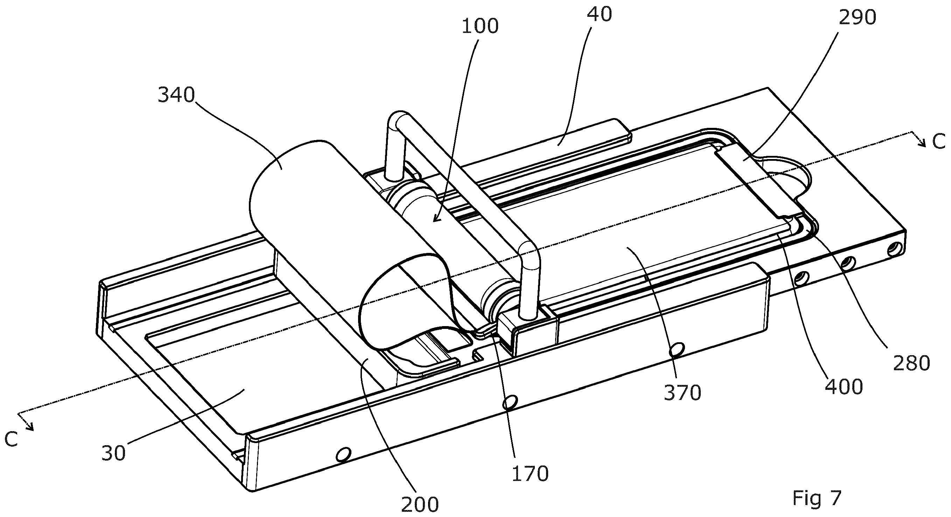

The moveable base portion 200 is arranged adjacent seat portion 30 and has longitudinal edges that extend adjacent walls 40 such that base portion 200 is retained between walls 40 and seat portion 30. Base portion 200 is substantially rectangular. The longitudinal edges of base portion 200 cooperate with slots 50 such that moveable base portion may move longitudinally relative stationary portion 20 along slots 50 from the first position 200 shown in figures 1 to 5 to a second position shown in figures 7 to 9 via an intermediate position as shown in figure 6. In a preferred embodiment, the exterior dimensions of base portion 200 and the internal dimensions of slots 50 are a close running fit. Slots 50 extend along at least a portion of walls 40. A carriage mechanism 60, and related components, may be present to aid relative movement between moveable base portion 200 and stationary portion 20.

Spindle 90 also retains a guide means 170 that extends between retention blocks 80. Guide means 170 is formed of a substantially u-shaped member having a planar profile. Apertures are formed toward the distal ends of guide means 170, through which spindle 90 extends. The guide means 170 extends away from the spindle in a first direction to provide clearance to the roller 100. Guide means 170 extends adjacent roller 100, and toward base portion 200 that is arranged between the seat portion 30 and the press means assembly 70. Guide means 170 extends transverse both stationary portion 20 and base portion 200.

In a further embodiment, guide means 170 is affixed to retention blocks 80. Guide means may be pivotally connected to the retention blocks 80 or spindle 90, or in a fixed configuration.

Guide means 170 has a flat upper surface that is preferably arranged at an acute downward angle toward an upper surface 210 of base portion 200. In an alternative embodiment, the guide means may be tilted toward upper surface 210 or arranged parallel thereto.

Base portion 200 has a recess 220 for retaining an electronic device 400. In the present embodiment, the recess 220 is substantially rectangular and arranged in a substantially central location. The recess 220 is sized and shaped to accommodate a range of electronic device 400 models, which invariably differ in external dimensions. In an alternative embodiment, recess 220 of base portion 200 may be sized to accommodate a specific model of electronic device 400. Recess 220 extends from the upper surface 210 of base portion 220 to a depth sufficient to accommodate the depth of a standard electronic device 400 in part or in whole. The electronic device 400 is retained such that any planar portion of the surface of the electronic device 400 to which the overlay 370 is to be applied is parallel to the upper surface 210 of base portion 200. Alternatively, the planar portion of the surface of the electronic device 400 may be parallel to upper surface 210. In a preferred embodiment, the bottom face 230 of recess 220 may optionally have indentations or apertures to aid the insertion and/or removal of electronic devices 400 placed therein.

When the base portion 220 is in a first position, as shown in figure 1, base portion 200 has a proximal end adjacent press means assembly 70 and substantially between press means assembly 70 and seat portion 30. Between the recess 220 and distal end of base portion 200 is an optional grip portion 270 for manually moving base portion 200 between the first position and the second position and vice versa. An optional handle 190 is affixed to the retention blocks 80 of stationary portion 20 for aiding the stability of stationary portion 20 when the base portion 200 is moved relative the stationary portion 20. Movement is manually effected in the present embodiment. However, in a further embodiment, movement may be effected by a motor or other means.

In the first position, base portion 220 has a distal extent beyond that of the seat portion 30. In a further embodiment, the seat portion 30 has an extent greater than or equal to that of the base portion 200.

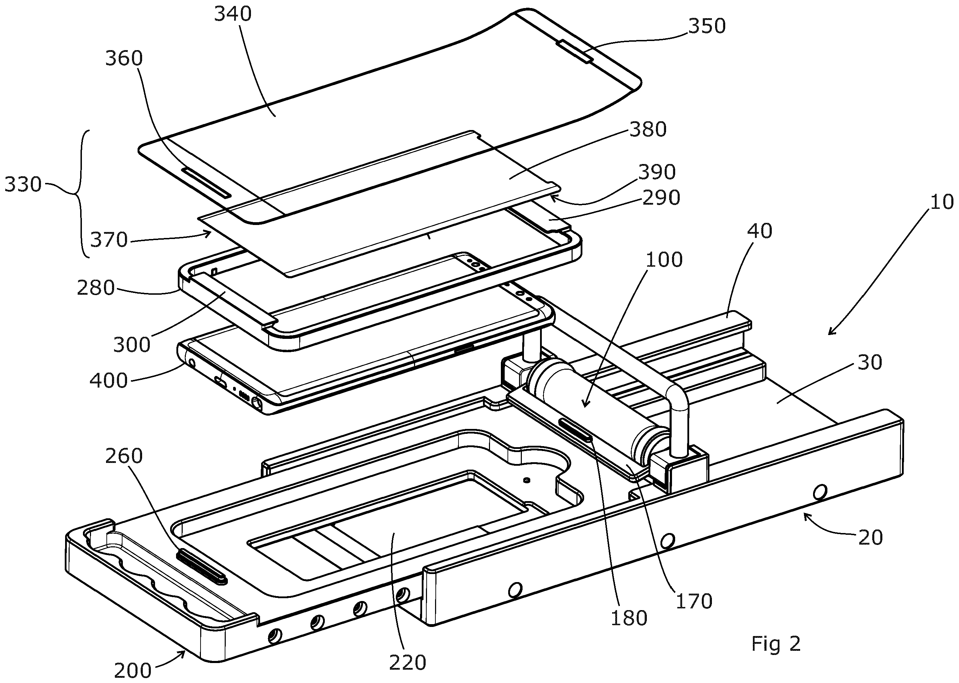

Figure 2 shows an overlay application device 10 in accordance with the present invention in an exploded assembly with electronic device 400, insert 280 and overlay assembly 330.

An insert 280 may be provided for insertion into recess 220. The insert 280 of the present embodiment is in the form of a frame having exterior dimensions 310 selected to cooperate with those of recess 220. The recess depth 240 is substantially equal to that of insert 280 such that, when assembled, the uppermost surface of insert 280 is coplanar with that of upper surface 210 of base portion 200.

In an alternative embodiment, the recess depth 240 is not equal to that of insert 280. In such embodiments, the insert 280 will be sized such that the exposed surface of the electronic device 400 is at least is coplanar with a surface of roller 100. The recess depth 240 may be greater or lesser than that of insert 280.

Insert 280 has interior dimensions selected to accommodate a specific model of electronic device 400. Consequently, the single recess 220 may be sized to accommodate a range of known electronic devices 400. The overlay application device may be provided with a range of inserts 280, each sized to accommodate a specific model of electronic device 400 in a locational clearance fit.

A first tab 290 at a proximal end and a second tab 300 at a distal end of the upper surface of insert 280 provide a locating surface for retaining an electronic device therein as well as providing a surface contiguous with that of upper surface 210 of base portion 200.

In the present embodiment, electronic device 400 is coupled to an insert 280 forming a frame around electronic device 400 before insertion into recess 220. Once inserted, an overlay assembly 330 comprising an overlay backing 340 and an overlay 370 may be located on the overlay application device 10 relative the recess 220 holding electronic device 400.

Overlay 370 is a standard overlay commercially available and commonly applied to electronic devices 400 to protect screens and visual displays. Overlays, also known as screen protectors are known and available in a variety of materials and thicknesses suitable for commercially available electronic devices 400, including touch screen devices. Overlay 370 comprises a known overlay sheet 380 with an adhesive layer 390 applied to one surface. In the present embodiment, the adhesive layer 390 covers substantially the entirety of a surface of overlay sheet 380. However, in alternative embodiments, the adhesive layer 390 may cover a portion of a surface of overlay sheet 380. Overlay sheet 380 may be shaped to fit a specific model of electronic device 400, or may be a standardised size and configuration to fit a range of electronic devices 400. Overlay sheet 380 may be uniform in thickness and be formed of a continuous sheet, or it may be formed of a plurality of sheets, or one or more sheets with slots, apertures or other parts removed to accommodate microphones, speakers, camera apertures or other such features of electronic devices 400.

In the present embodiment, overlay backing 340 is formed of a flexible material, and overlay sheet 380 is formed of a rigid material. In a further embodiment, overlay sheet 380 is formed of a flexible material of greater rigidity than that of the overlay backing 340. In a yet further embodiment, overlay sheet 380 is formed of a material having greater thickness than that of the overlay backing 340. Alternatively, the overlay backing 340 may be formed of a material having greater thickness than that of overlay sheet 380. The overlay sheet 380 may be formed of glass or polymer. In a preferred embodiment, the overlay sheet 380 is polyethylene terephthalate.

An overlay backing 340 is provided to protect overlay 370 prior to application to an electronic device 400. Overlay backing 340 typically has a larger surface area than overlay 370, to ensure a surface of overlay sheet 380 is protected in its entirety and for ease of removal from overlay 370 after application. Overlay backing 340 is applied to a surface of overlay sheet 380 opposite that to which adhesive layer 390 is applied. Overlay assembly 330 may optionally comprise a further protective layer covering adhesive layer 390.

Overlay assembly 330 may be affixed to overlay application device 10 relative recess 220, and insert 280 where present, and any electronic device 400 retained therein. This allows overlay 370 to be aligned with the screen or display of electronic device 400.

To this end, a first aperture 350 is provided at a first end of overlay backing 340 for cooperation with locating protrusion 180 provided on guide means 170. A second aperture 360 is provided at a second end of overlay backing 340 for cooperation with locating means 260 provided on base portion for locating overlay assembly 330. The first and second apertures 350, 360 may therefore be removably affixed to locating protrusion 180 and locating means 260 respectively.

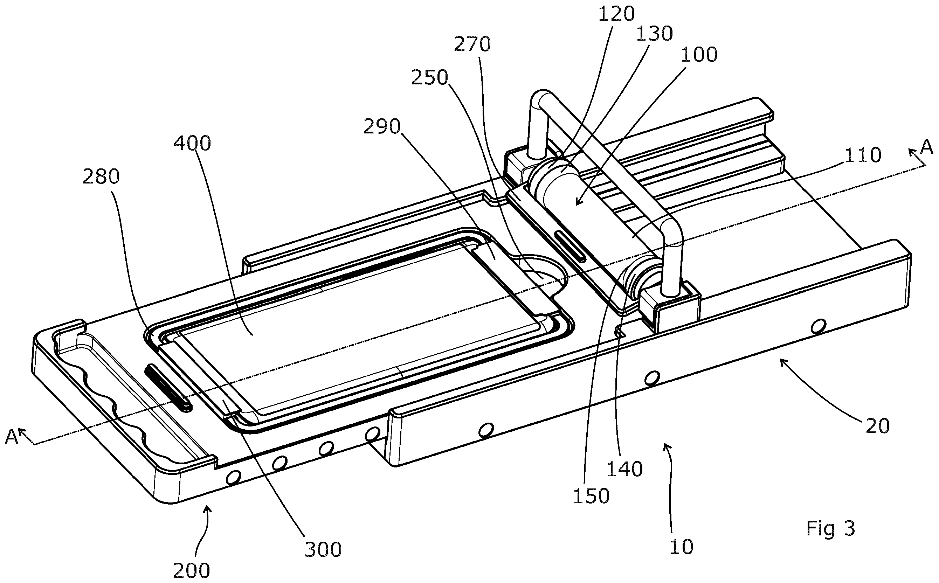

Figure 3 shows the overlay application device 10 with an electronic device 400 inserted into insert 280, the insert 280 and electronic device 400 retained in recess 220. Recess 220 includes optional indent 250 provided to aid the manual insertion and removal of the insert 280 and/or electronic device 400.

Roller 100 has a central portion 110 of constant cross sectional area. A first end portion 120 and a second end portion 140 opposite the first has a greater cross sectional area than that of the central portion 110. A taper 130 connects first end portion 120 to central portion 110. A taper 150 connects second end portion 140 to central portion 110. The roller 100 is retained by spindle 90 such that first and second end portions 120, 140 are in constant contact the upper surface 210 of base portion 200.

Roller 100 is formed of a resilient material. In a preferred embodiment, the roller 100 is formed of a resilient deformable rubber. Roller 100 is retained relative stationary portion 20 by affixing spindle 90 to retention blocks 80 at a height selected to ensure that roller 100 applies pressure a surface thereunder. In a further embodiment, the roller 100 may have a constant cross sectional area across its length. In a further embodiment, the roller 100 may have a constant cross sectional area across its length and may be formed of a resilient material so that, in use, roller 100 conforms to the surface of electronic device 400.

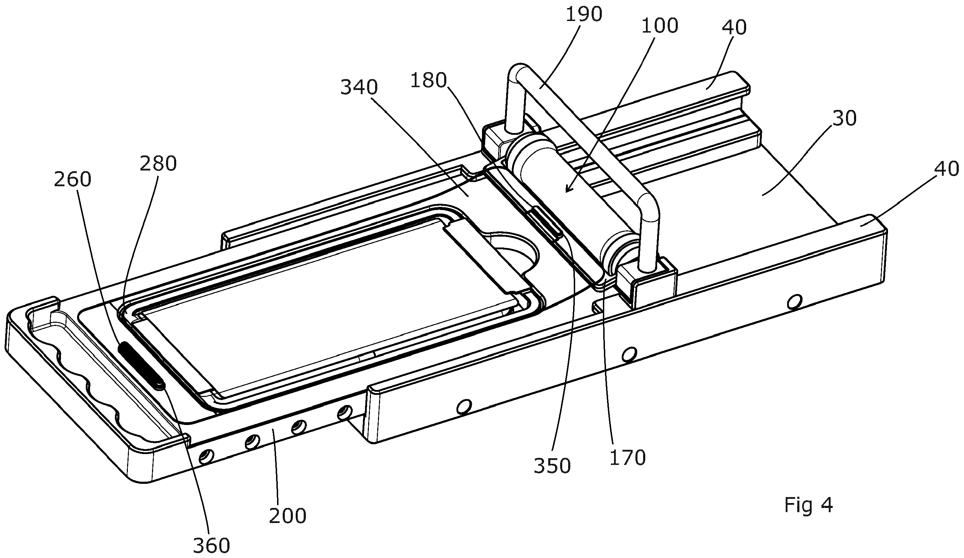

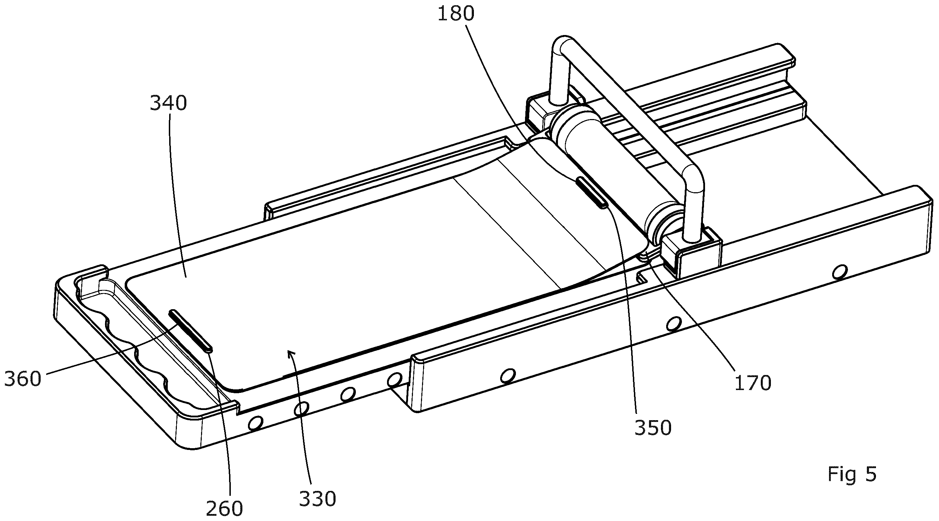

Figures 4 and 5 show the assembly of figure 3 with the overlay assembly 330 located with respect to the overlay application device 20. The overlay assembly is shown in figure 4 as transparent, and opaque in figure 5.

Locating protrusion 180 located on guide means 170 causes the first end of the overlay backing 340 to be retained away from the upper surface 210 of base portion 200. This prevents adhesive layer 390 adhering to the surface of electronic device 400 before the overlay 370 is applied. First tab 290 and second tab 300 protrude above the upper surface 210 of base portion 200 and are arranged at a downward incline toward the centre of the insert 280. The uppermost part of first and second tabs 290, 300 are coplanar with upper surface 210 of base portion 200. This provides a further means to retain the overlay 370 away from the surface of the electronic device 400 prior to application, and provides a guide toward the surface of electronic device 400 for the roller 100 in use.

Locating means 260 located on upper surface 210 of base portion 200 retains the second end of overlay backing 340 adjacent upper surface 210.

Figure 6 shows the base portion 200 in a intermediate position between the first and second positions. Base portion 200 has been manually manoeuvred along slots 50 such that the proximal end of base portion 200 has moved away from the press means assembly 70. As base portion 200 is moved relative stationary portion 20, the first end of overlay backing 340 is retained by locating protrusion 180, causing the overlay backing 340 to deform and overlay 370 to separate from overlay backing 340. When the overlay application device 10 is in the first position, the overlay assembly 330 is retained at an acute angle to the upper surface 210 of base portion 200, and thus electronic device 400. The angle of guide means 170 encourages the overlay backing 340 to ripple, causing separation of the overlay 370 from the overlay backing 340. The relative rigidity of overlay sheet 380 as compared to the overlay backing 340 causes the overlay sheet 370 to maintain its planar profile. The lowermost portion of the guide means 170 passes between the overlay sheet 370 and the overlay backing 340.

First tab 290 retains overlay 370 in position in respect of electronic device 400. Roller 100 rotates as base portion 200, insert 280 and electronic device 400 pass beneath the roller 100, such that first and second end portions 120, 140 of roller 100 pass over the edges of recess 220 and the side portions of insert 280. The roller 100 exerts pressure across the surface of overlay 370, causing any residual trapped air between the electronic device 400 and the overlay 370 to be pushed toward the distal end of the base portion 200. Second tab 300 prevents overlay sheet 370 from moving longitudinally as roller 100 passes thereover.

Figure 7 shows base portion 200 in the second position. Overlay backing 340 is shown as entirely separated from overlay 370, which is shown in position on electronic device 400. The first end of overlay backing 340 is retained adjacent guide means 170 as first aperture 350 continues to cooperate with locating protrusion 180. The second end of overlay backing 340 is retained in position relative base portion 200 as second aperture 360 continues to cooperate with locating means 260.

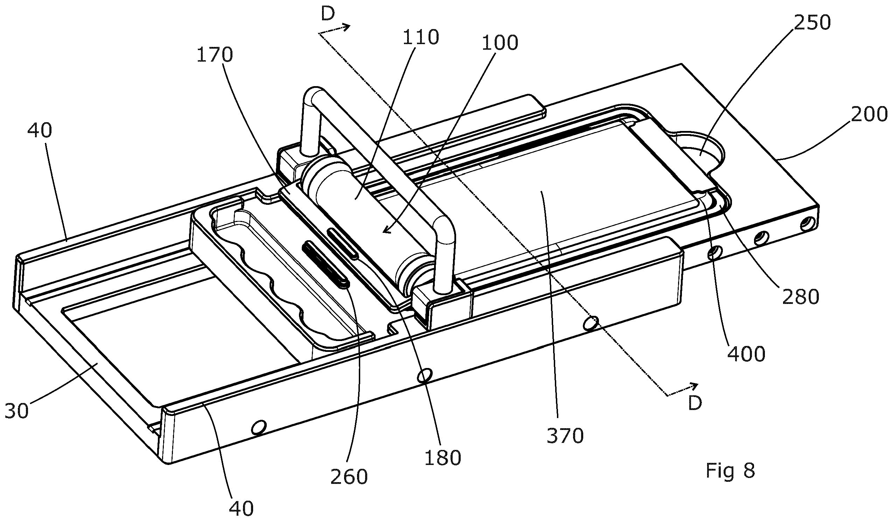

Figure 8 shows base portion 200 in the second position, the overlay backing 340 having been removed from the overlay application device 20. Overlay 370 has been affixed to electronic device 400 by the central portion of roller 100 applying pressure to overlay 370 as it passes over the surface of overlay 370 and electronic device 400. The combination of pressure and movement squeezes trapped air from between the overlay 370 and the surface of electronic device 400 as the roller 100 passes thereover. Trapped air is not only unsightly, it may hinder use of the electronic device 400 itself, particularly where the electronic device 400 comprises a touch screen for user interaction.

When the base portion 200 is in the second position, the roller 100 has passed over the overlay 370 in its entirety. In further embodiments, when the base portion 200 is in the second position, the roller 100 has passed over the insert 280 and/or the recess 220 as a whole. In a further embodiment, the roller 100 has passed over the electronic device 400 in its entirety.

In the present embodiment, the guide means 170 is adjacent locating means 260 when the base portion 200 is in the second position. However, in an embodiment in which the guide means 170 is pivotally connected to the spindle 90 or the retention blocks 80, the guide means 170 may be lifted for passage over the locating means 260. This is of benefit where recess 220 is larger compared to the size of base portion 200.

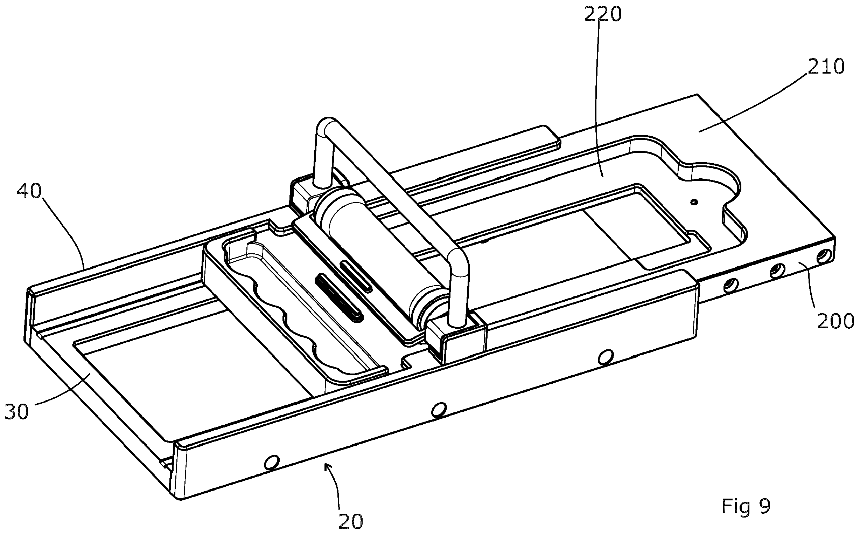

Figure 9 shows the overlay application device 10 of figure 8 with the recess 220 voided. Electronic device 400 is not present in recess 220.

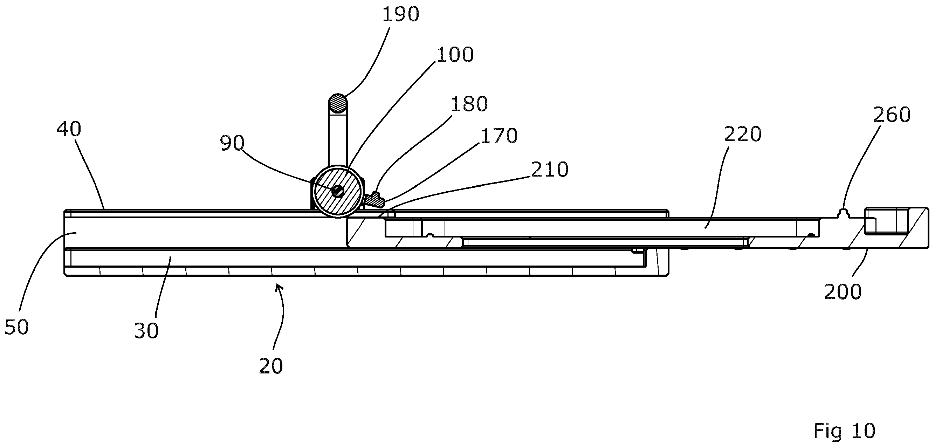

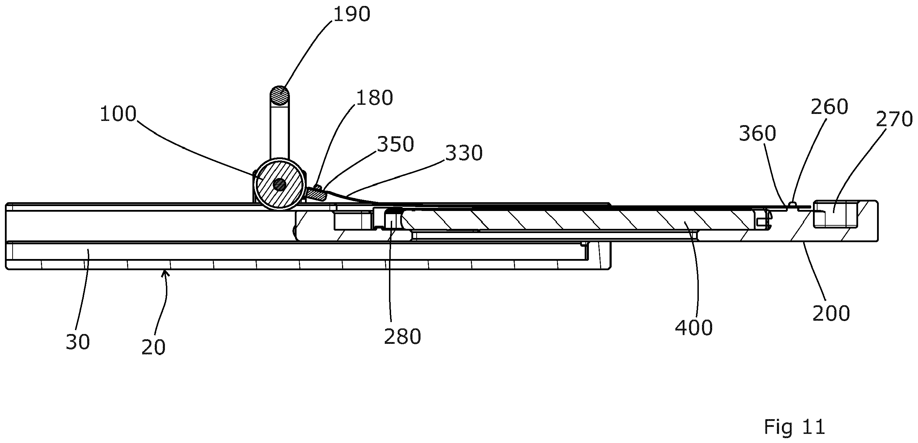

Figures 10 and 11 show a section view along section line A-A as shown in figure 3, with the base portion 200 in the first position. Figure 10 shows the overlay application device 10 absent insert 280 and electronic device 400. The moveable base portion 200 is arranged substantially parallel to seat portion 30 of stationary portion 20. The largest extent of roller 100, at first and second end portions 120, 140 is coplanar with the upper surface 210 of base portion. The diameter of roller 100 and spindle height 90 is selected accordingly. In a further embodiment, the extent of the largest diameter portion of roller 100 overlaps the plane of upper surface 210 of base portion 200. In such embodiments, the pressure applied by the roller 100 to overlay 370 during the process of applying overlay 370 to an electronic device 400 is greater than that applied in embodiments in which the largest extent of roller 100 diameter is coplanar with the upper surface 210 of base portion 200. Alternatively, the material of roller 100 may be selected such that the pressure exerted is not greater than that applied in embodiments in which the largest extent of roller 100 diameter is coplanar with the upper surface 210 of base portion 200.

Figure 11 shows the overlay application device 10 with an electronic device 400 inserted in insert 280 retained in recess 220. The recess depth 240 of recess 220 is less than the greatest thickness of insert 280. The interior dimensions 320 of insert 280 are selected to accommodate a specific model of electronic device 400. The exterior dimensions of insert 280 are selected such that the depth of insert 280 is less than the depth of electronic device 400. Consequently, the upper surface of electronic device 400 occupies a plane a closer to that of the spindle 90 axis that that of the upper surface 210 of base portion 200. The surface of electronic device 400 is therefore raised with respect to upper surface 210 for contact with the lesser extent of the surface of roller 100 at the central portion 110.

In an alternative embodiment, the recess depth 240 of recess 220 is substantially equal to the thickness of insert 280.

Overlay assembly 330 is positioned relative overlay application device 10 such that the first end of overlay backing 340 is affixed to stationary portion 20 at locating protrusion 180 and the second end of overlay backing 340 is affixed to the moveable base portion 200 at locating means 260.

A small air gap is present between the overlay assembly 330 and the surface of electronic device 400. The air gap is greater toward the first end of overlay backing 340 by virtue of locating protrusion 180 being raised, or at a greater distance from the surface of the base portion 200, relative locating means 260. This air gap prevents adhesive layer 390 from adhering to the surface of electronic device 400 in advance of application by roller 100. This is particularly important to the application of overlays 370 having an adhesive layer 390 that covers substantially the entirety of one surface of overlay sheet 380. Such overlays can be extremely difficult or impossible to reposition once the adhesive layer 390 has been adhered to a surface. Furthermore, trapped air between the adhesive layer 390 and the surface of the electronic device 400 to be protected may be more difficult to remove, particularly where the adhesive layer 390 has adhered to a surface around its periphery.

Overlay 370 is positioned relative to overlay backing 340 such that, in use, when electronic device is retained in recess 220, overlay backing 340 locates correctly with respect to the overlay application device 10 and overlay 370 locates correctly with respect to electronic device 400 and recess 220. Likewise, the location of first and second apertures 350, 360 are selected for correct location with respect to locating protrusion 180 and locating means 260.

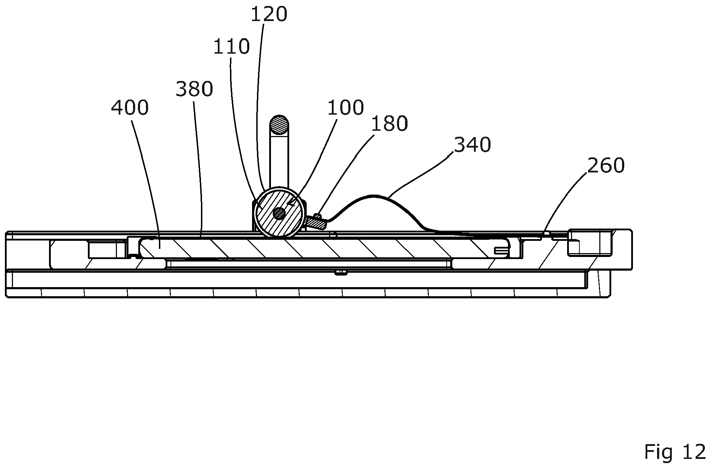

Figure 12 shows a section view along section line B-B. The base portion 200 is shown in the intermediate position depicted in figure 6. Roller 100 applies pressure to the surface of overlay sheet 380. Central portion 110 of roller 100 is shown in contact with overlay sheet 380.

The majority of overlay 370 is separated from overlay backing 340, as overlay backing 340 is urged away from overlay application device 10 by a compressive force exerted by the relative movement between locating means 260 and locating protrusion 180.

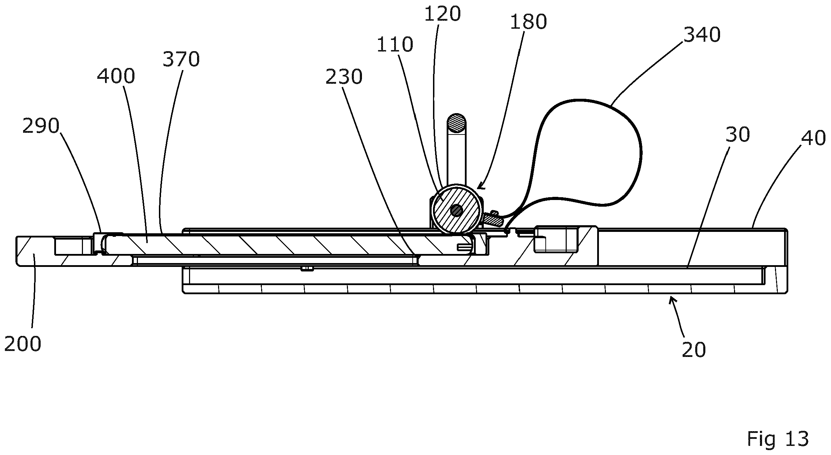

Figure 13 shows a section view along section line C-C, in which the base portion 200 is shown in the second position depicted in figure 7. Overlay backing 340 is fully separate from overlay 370. Roller 100 has completed passage across overlay 370, which is adhesively affixed to electronic device 400.

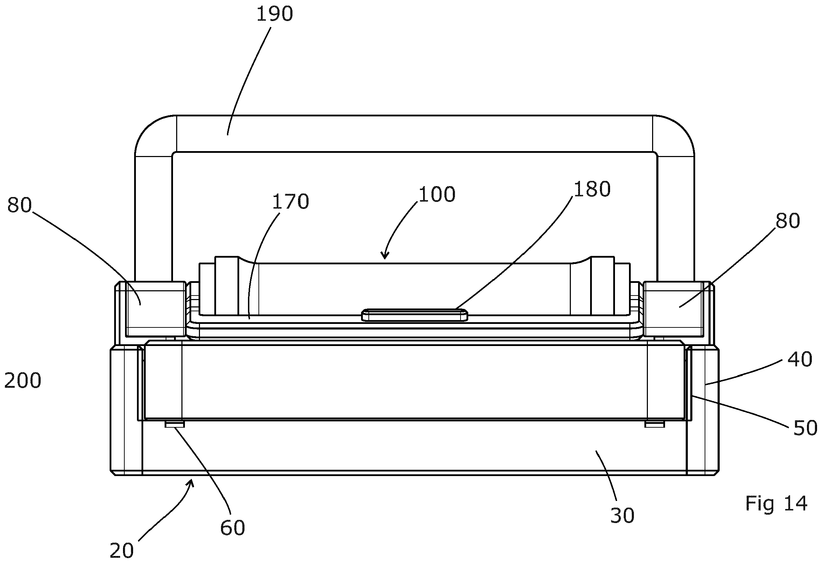

Figure 14 shows an end view of overlay application device 10. The upper surface 210 of base portion 200 is proximal to or in contact with the lower extent of guide means 170. Retention blocks 80 are affixed to walls 40 adjacent slots 50. On another side of slots opposite that of retention blocks 80 is seat portion 30. A feature of carriage mechanism 60 is visible in seat portion 30 to aid the relative movement between stationary portion 20 and base portion 200.

The press means assembly 70 forms a part of the stationary portion 20 so that the location of the spindle 90 relative base portion 200 remains consistent.

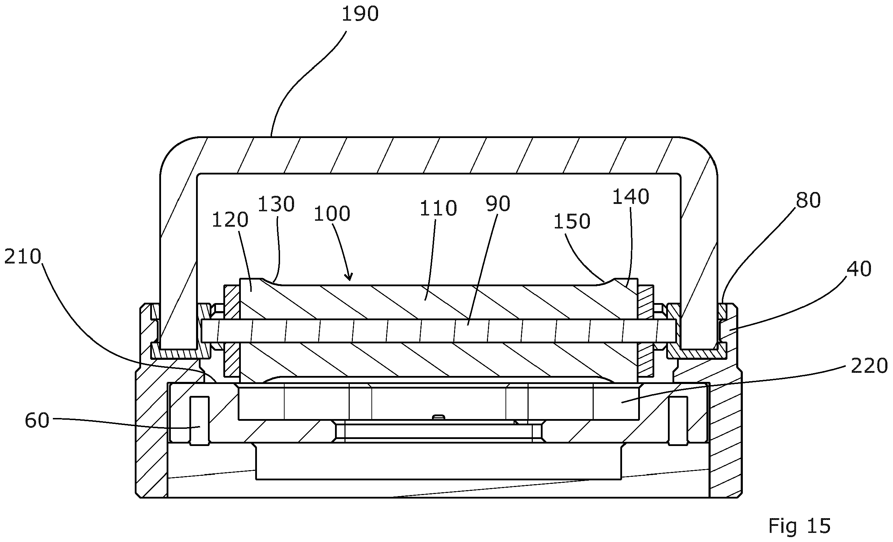

Figure 15 shows a section view along section line D-D as shown in figure 8. Roller 100 extends laterally across the overlay application device 10 such that roller 100 extends over recess 220. The lateral extent of recess 220 is the same as or greater than that of roller 100. The first and second end portions 120, 140 of roller 100 overlie recess 220. The external surface of first and second end portions 120, 140 of roller 100 is coplanar with upper surface 210 of base portion 200.

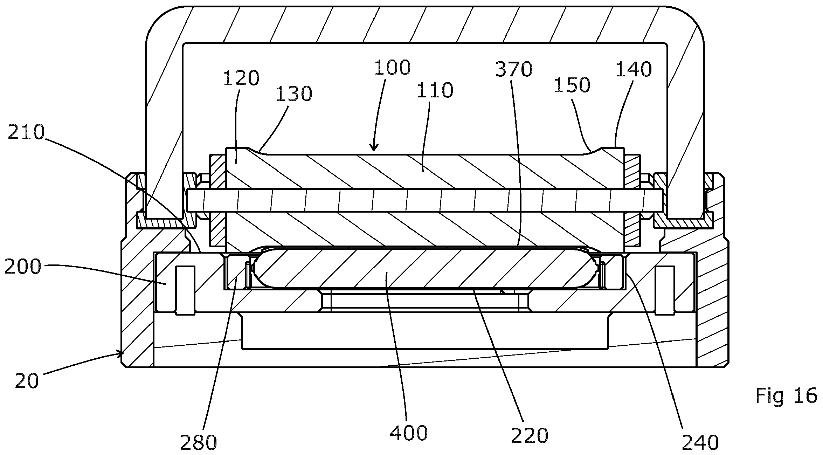

Figure 16 shows the overlay application device of figure 15 with an electronic device 400 inserted into insert 280, and insert 280 retained in recess 220. The recess depth 240 is greater than that of the depth of insert 280. Consequently, there is a gap between the first and second end portions 120, 140 of roller 100 and insert 280. The first and second end portions 120, 140 of roller 100 overlie insert 280.

The depth, or thickness, of electronic device 400 is greater than that of insert 280. The depth, or thickness, of electronic device 400 is greater than the recess depth 240 of recess 220. The central portion 110 of roller 100 is sized such that the central portion 110 contacts the surface of overlay 370. In a preferred embodiment, the depth of the electronic device 400 and the overlay 370 combined is greater than the space between the bottom face 230 of recess 200 and the surface of central portion 110 of roller 100. This causes a slight compression of the roller 100 and the application of pressure to overlay 370. The degree of pressure desired may be selecting by adjusting the size of the space between the bottom face 230 of recess 200 and the surface of central portion 110 of roller 100. The degree of pressure may also be adjusted by providing an insert 280 having an additional support to retain an electronic device 400 in a position spaced apart from the bottom face 230 of recess 220. Likewise, the degree of resilience of the roller 100 material may also be adjusted for this purpose.

An insert 280 having an additional support to retain an electronic device 400 in a position spaced apart from the bottom face 230 of recess 220 may also be provided to accommodate slimmer models of electronic device 400, thus enabling the overlay application device 10 to be used for a yet wider range of electronic devices 400.

Taper 130 between the first end portion 120 and the central portion 100 of roller 100 is positioned adjacent the interior dimension 320 of insert 280, as is taper 150 between the second end portion 140 and central portion 110 of roller 100. Where present, tapers 130, 150 provide an angled surface for applying pressure to an overlay 370 affixed to a non-planar portion of electronic device 400.

Many electronic devices 400 have curved screens or displays so it is desirable to protect the same from wear and damage. The central portion 110 of roller 100 applies pressure to the part of overlay 370 applied to the planar portion of the screen or display, and the tapers 130, 150 apply pressure to the part of overlay 370 applied to the curved, or non-planar, portion of the screen or display of electronic device 400. The extent and the angle of taper may be adjusted according to the degree of curvature. In embodiments in which the roller 100 is of constant cross sectional area, the roller 100 may deform to create a surface equivalent to that of central portion 110 and tapers 130, 150 in use.

In such instances, the overlay sheet 380 may be planar prior to application, or may be shaped accordingly. The material of the overlay sheet 380 may be flexible.

By providing taper 130, 150 in conjunction with central portion 110, a uniform pressure may be applied across the overlay 270 during application to achieve uniform adhesion of adhesive layer 390 and ensure air pockets between the adhesive layer 390 and the electronic device 400 are removed on both planar and non-planar portions.

It will of course be understood that many variations may be made to the above-described embodiment without departing from the scope of the present invention.

## Claims

1. An overlay application device comprising:
a stationary portion and a moveable base portion arranged for movement relative the stationary portion,
the base portion comprising a recess for retaining an electronic device therein, and
the stationary portion comprising a press means extending transverse the base portion adjacent the recess and arranged such that the surface of the press means is at a fixed distance from the recess.

2. An overlay application device according to claim 1, wherein the stationary portion further comprises a protrusion arranged for locating a first end of an overlay backing relative the stationary portion.

3. An overlay application device according to claim 1 or claim 2, wherein the base portion further comprises a protrusion for locating a second end of an overlay backing relative the base portion.

4. An overlay application device according to any preceding claim, wherein the press means comprises a central portion having a substantially constant cross sectional area.

5. An overlay application device according to claim 4, wherein the press means has end portions, each end portion having a cross sectional area greater than that of the central portion, and a taper between the central portion and each of the end portions.

6. An overlay application device according to claim 5, wherein the taper is arranged for passage adjacent longitudinal edges of the recess.

7. An overlay application device according to any preceding claim, wherein the press means is a roller.

8. An overlay application device according to any preceding claim, further comprising an insert for retaining an electronic device therein, and arranged for insertion into the recess.

9. An overlay application device according to claim 8, wherein the insert is a frame.

10. An overlay application device according to claim 9, wherein the frame has inside dimensions sized to accommodate a specific model of electronic device.

11. An overlay application device according to any preceding claim, wherein the stationary portion further comprises a seat portion for supporting the base portion.

12. A method of applying an overlay to an electronic device, the method comprising the steps of:
providing an overlay application device comprising a stationary portion and a base portion, the base portion comprising a recess for receiving an electronic device, the stationary portion having a press means;
inserting an electronic device in the recess;
providing an overlay assembly comprising an overlay and an overlay backing, the overlay comprising an adhesive layer on a first side and the overlay backing affixed to a second side of the overlay;
positioning the overlay assembly relative the base portion such that the overlay is aligned with the recess, the adhesive layer facing the recess;
moving the base portion relative the stationary portion from a first position to a second position to cause the overlay backing to separate from the overlay, and the press means to apply pressure to the overlay.

13. A method according to claim 12, the method further comprising the steps of: providing an insert sized to retain an electronic device; and inserting the insert into the recess.

14. A method according to claim 12 or 13, the method further comprising the steps of:
locating a first end of the overlay backing on a protrusion on the stationary portion; and locating a second end of the overlay backing on a protrusion on the base portion.

15. A kit of parts comprising an overlay applicator device according to claim 1, an insert sized for insertion into the recess of the overlay applicator device, and an overlay assembly comprising an overlay and an overlay backing.
